# EUROPÄISCHE PATENTANMELDUNG

(11) **EP 1 739 304 A1**
(43) Veröffentlichungstag der Anmeldung: **03.01.2007**
(21) Anmeldenummer: 05013787.6
(22) Anmeldetag: 27.06.2005
(51) Int. Cl.: F03B 17/04

(54) **Auftriebmotor**

(71) Anmelder: Dentler, Eugen, 88422 Oggelshausen (DE)
(72) Erfinder: Dentler, Eugen, 88422 Oggelshausen (DE)
(74) Vertreter: Muri, Peter

(57) **Zusammenfassung**

Die Erfindung betrifft einen Generator für die Gewinn von Energie, insbesondere eines Drehmoments bestehend aus mindestens zwei elastischen Auftriebskörpern (3) die um mindestens zwei Umlenkelemente (2) bewegt werden und dabei einen flüssigkeitsgefüllten Behälter (7) durch eine an dessen dem Erdboden zugewandten Stirnfläche angeordnete Eintrittsöffnung (8) passieren, deren Querschnitt kleiner ist als der Querschnitt eines elastischen Auftriebskörpers (3) im entlasteten Zustand. Um die elastischen Auftriebskörper vor dem Eintritt in den flüssigkeitsgefüllten Behälter (7) auf den Querschnitt der Eintrittsöffnung (8) zu verjüngen, wird erfindungsgemäß ein Trichterelement (12) vorgeschlagen, welches vor der Eintrittsöffnung (8) angeordnet.

## Beschreibung

### Technisches Gebiet

Die Erfindung bezieht sich auf eine Vorrichtung zur Generierung von Energie, insbesondere eines Drehmoments durch Nutzung der auf einen Körper wirkenden Auftriebs- und Erdanziehungskräfte.

### Stand der Technik

Aus dem Stand der Technik sind verschiedene Energiegeneratoren bekannt, welche die Auftriebskraft eines in einer Flüssigkeit eingetauchten Körpers (auch Archimedeskraft genannt) sowie die auf den Körper wirkende Erdanziehungskraft in ein Drehmoment umwandeln.

So ist aus US 1,708,807 B eine Vorrichtung bekannt, die aus zwei Umlaufelementen besteht, deren Achsen parallel und senkrecht fluchtend zueinander an einem Grundgestell angeordnet sind. Zwischen den Umlaufelementen, einem oberen und einem unteren Umlaufelement, ist ein als Endloskette ausgebildetes Koppelungselement gespannt, bestehend aus einem ersten Teilabschnitt, der sich entgegen der Schwerkraft bewegt (Zugseite) und einem zweiten Teilabschnitt, der sich mit der Schwerkraft bewegt. An diesem Koppelungselement sind zumindest zwei Auftriebskörper nacheinander befestigt. Das Koppelungselement ist so angeordnet, dass es eine Umlaufbewegung um das obere und untere Umlaufelement ausführen kann. An dem ersten Teilbereich des Koppelungselement ist ein flüssigkeitsgefüllter Behälter derart angeordnet, dass die Auftriebskörper den flüssigkeitsgefüllten Behälter durchlaufen können. Der flüssigkeitsgefüllte Behälter ist dabei an seinem oberen Ende geöffnet und weist auf seiner unteren Stirnseite ein Abdichtungselement (beispielsweise eine Gummimembran) auf, die ein Austreten der Flüssigkeit aus dem flüssigkeitsgefüllten Behälter verhindern soll und es gleichzeitig ermöglicht, dass das Koppelungselement mit den Auftriebskörpern von unten in den flüssigkeitsgefüllten Behälter eintreten und durch diesen durchlaufen kann. Die Zugseite des Koppelungselements verläuft durch den flüssigkeitsgefüllten Behälter, wodurch die Auftriebskörper auftreiben, während die Auftriebskörper auf der anderen, nicht zugbelasteten Seite aufgrund ihres Eigengewichts absinken. Dadurch entsteht eine Drehbewegung um die Umlaufräder.

Aus JP 03121274 A ist eine Vorrichtung bekannt, die ebenfalls aus einem endlos rotierenden Element (vorzugsweise einer geschlossenen Kette) besteht, an dem Auftriebskörper angebracht sind. Die Auftriebskörper an der Zugseite treten dabei über eine druckreduzierende Kammer und ein Rückflussventil von unten in den flüssigkeitsgefüllten Behälter ein.

### Nachteile des Stand der Technik

Um eine Leckage des flüssigkeitsgefüllten Behälters zu verhindern, wird eine Abdichtung benötigt. Da die Auftriebskörper nach dem Stand der Technik jedoch durch die dem Erdboden zugewandten untere Stirnfläche des flüssigkeitsgefüllten Behälters, d.h. durch die Abdichtung eingeführt werden, muss die Abdichtung flexibel sein. Auf einer solchen flexible Abdichtung, etwa in Form einer Dichtlippe aus Gummi lastet der in dem flüssigkeitsgefüllten Behälter vorherrschende Wasserdruck. Je größer die Fläche dieser Abdichtung ist, umso größer ist der auf ihr lastende Wasserdruck. Ein Auftriebskörper, der von unten in den gefüllten Behälter eintritt, muss folglich den auf der Abdichtung wirkenden Wasserdruck und zusätzlich den durch die Steifigkeit des jeweiligen Materials der Abdichtung entstehenden Widerstand überwinden. Hierfür wird ein erheblicher Teil der Energie benötigt, die durch die Auftriebskraft entsteht, welche auf die sich in dem gefüllten Behälter befindlichen Auftriebskörper wirkt.

### Aufgabe der Erfindung

Der Erfindung liegt die Aufgabe zugrunde, den aufgezeigten Nachteil des Stands der Technik zu verhindern.

Eine Teilaufgabe der Erfindung ist es, eine weitere Vorrichtung der eingangs bezeichneten Art bereitzustellen, die insbesondere Auftriebskräfte zur Energieerzeugung, insbesondere eines Drehmoments nutzt.

### Lösung

Kerngedanke der Lösung ist es, Auftriebskörper für einen aus dem Stand der Technik bekannten Energiegenerator vorzuschlagen, die elastisch und somit in ihrer Form flexibel sind. Erfindungsgemäß ist der Querschnitt der für den Eintritt der Auftriebskörper vorgesehenen Öffnung an der Unterseite des flüssigkeitgefüllten Behälters kleiner als der Querschnitt eines elastischen Auftriebskörpers im entspannten Zustand. Beim Eintritt in den flüssigkeitsgefüllten Behälter wird der Querschnitt eines Auftriebskörpers verringert, um die Eintrittsöffnung passieren zu können. Sobald der Auftriebskörper die Eintrittsöffnung passiert hat, nimmt er wieder seine entspannte Ausgangsform an, wodurch die maximale Auftriebskraft auf den Auftriebskörper innerhalb des mit fluidgefüllten Behälters wirken kann.

### Vorteile der Erfindung

Ein wesentlicher Vorteil der Erfindung besteht darin, dass der Wasserdruck, welcher auf die Fläche des Abdichtungselements wirkt und der Wasserdruck, welcher auf der Oberfläche des in den flüssigkeitsgefüllten Behälter eintretenden Auftriebskörper wirkt, verringert wird. Für das Einführen eines Auftriebskörpers in den flüssigkeitgefüllten Behälter muss daher weniger Widerstand überwunden werden, wozu weniger Energie benötigt wird.

Vorteilhafterweise erlaubt die Reduktion des Querschnitts der Eintrittsöffnung des flüssigkeitsgefüllten Behälters die Verwendung einer kleineren Abdichtung. Aufgrund der verkleinerten Eintrittsöffnung wird ferner die Möglichkeit einer Leckage des flüssigkeitsgefüllten Behälters reduziert.

Schließlich wird durch die Elastizität der um die Umlenkelemente umlaufenden Auftriebskörper der Schlupf zwischen den Auftriebskörpern und den Umlenkelementen verringert. Dadurch entsteht eine höhere Traktion zwischen Auftriebskörper und Umlenkelement und damit eine effektivere Nutzmöglichkeit des dabei entstehenden Drehmoments.

Eine besonders bevorzugte, vorteilhafte Ausführungsform sieht ein zusätzliches Trichterelement vor. Diese wird vor der Eintrittsöffnung angeordnet, welche sich in der Unterseite des flüssigkeitsgefüllten Behälters befindet. Das Trichterelement ist vorzugsweise derart ausgebildet, dass auf die elastischen Auftriebskörper beim Passieren des Trichterelements mechanisch Druck ausgeübt wird, wodurch der Querschnitt der Auftriebskörper sukzessive auf den Querschnitt der Eintrittsöffnung verjüngt wird. Vorzugsweise ist das beschriebene Trichterelement in Form eines hohlen Kegelstumpfs ausgebildet, dessen schmale Öffnung vorzugsweise form-, kraft- oder stoffschlüssig mit der Eintrittsöffnung des flüssigkeitsgefüllten Behälters verbunden wird. Der Querschnitt dieses Trichterelements kann beispielsweise, aber nicht ausschließlich, rund, quadratisch, rechteckig oder elliptisch ausgebildet sein.

Alternativ kann das Trichterelement und die untere Stirnseite des flüssigkeitsgefüllten Behälters einstückig ausgebildet sein und den Abschluss des flüssigkeitsgefüllten Behälters mit einer Eintrittsöffnung bilden.

In einer bevorzugten Ausführungsform sind in einem solchen Trichterelement quer zur Bewegungsrichtung der Auftriebskörper Gleitelemente gelagert, welche die Reibung zwischen den Trichterwänden und den durchlaufenden Auftriebskörpern verringern. Solche Gleitelemente können beispielsweise als mehrere, unabhängig voneinander gelagerte Rollen ausgebildet sein, die sich vorzugsweise in einer sich zur Zugrichtung verjüngenden Querschnittsstufung angeordnet sind. Als Gleitelemente können neben Rollen aber auch andere Ausgestaltungen gewählt werden, die zu einer Verringerung der Reibung zwischen Auftriebskörper und Trichterelement beitragen (z.B. Gleitflächen, Schmierungen, etc.).

In einer weiteren vorteilhaften Ausführungsform der Erfindung sind die Auftriebskörper der erfindungsgemäßen Vorrichtung so gering voneinander beabstandet, dass die Eintrittsöffnung in den flüssigkeitsgefüllten Behälter immer oder überwiegend durch ein Teilstück eines Auftriebskörpers ausgefüllt ist. Hierdurch wird der Austritt von Flüssigkeit reduziert. Bevorzugt wird zusätzlich an den Rändern der Eintrittsöffnung Abdichtungselemente angebracht, welche den Austritt von Flüssigkeit überdies verhindern.

Vorzugsweise sind die Auftriebskörper als Hohlkörper ausgebildet, deren Außenhaut aus einem elastischen Material (beispielsweise Kautschuk, Gummi, Kunststoff oder dergleichen) besteht. Diese Hohlkörper können mit einem Fluid gefüllt sein.

Die Auftriebskörper bestehen aus einem entweder über Spritzgussverfahren erzielten Hohlkörper oder aus einem galvanisierten Material. Die Hohlkörper können beispielsweise aus zwei Hälften bestehen, die tonnenförmig an deren Mittelachse zusammengeführt sind. Alternativ kann der Hohlkörper aus Kautschuk einstückig im Spritzgussverfahren, z.B. im Kaltkanalverfahren, mit anschließender Vulkanisation hergestellt werden. Im Bereich der Mittelachse ist eine Öffnung vorgesehen, in der Konnektierungselemente eingebracht werden können. Diese Konnektierungselemente dienen dazu, die durch das Koppelungselement auftretenden Zugkräfte unmittelbar zu übertragen, ohne das die Zugkräfte auf die Außenhaut des Auftriebskörpers wirken. Dadurch wird vorteilhafterweise vermieden, dass das Material des Auftriebskörpers so auszulegen ist, dass dieses die doch sehr hohen Zugkräfte aufnehmen muss.

Das Kannektierungselement selbst ist vorzugsweise ein Drehteil aus Aluminium, Edelstahl oder rostfreiem Stahl, das aus zwei Hälften besteht, wobei die beiden Hälften derart anzuordnen sind, dass eines innerhalb des Auftriebskörpers anzuordnen ist und das andere außerhalb. Durch verschrauben der beiden Hälften des Konnektierungselements wird die Außenhaut des Auftriebskörpers zwischen dem Konnektierungselement eingeklemmt, so dass der Hohlraum des Auftriebskörpers fluiddicht ist. Das Kopplungselement selbst stellt jeweils eine Verbindung zwischen den Enden der Auftriebskörper bzw. deren Konnektierungselemente her, so dass eine Endloskette entsteht.

Eine alternative Ausbildung des Kopplungselements besteht darin, dass das Konnektierungselement durchgängige Bohrungen aufweist und das Kopplungselement somit vollständig durch die Auftriebskörper hindurchführbar ist, wobei aus Gründen der Kraftübertragung jeweils eine Fixierung des Kopplungselements an den Kannektierungselementen erfolgt.

Aufgrund der herrschenden großen Zugkräfte ist das Kopplungselement derart ausgebildet, dass dieses vorzugsweise aus einem Drahtseil besteht, das vorteilhafterweise kunststoffummantelt ist, um so Beschädigungen an den Auftriebskörpern zu verhindern. Alternativ hierzu kann auch ein Seil vorgesehen sein, das die entsprechenden Zugkräfte aufnehmen kann.

Die Konnektierungselemente selbst können alternativ aus Kunststoff gebildet sein. Voraussetzung ist, dass sie die entsprechenden Zugkräfte aufnehmen können.

In einer weiteren vorteilhaften Ausführungsform der Erfindung sind die fluidgefüllten Auftriebskörper fluidmässig miteinander verbunden. Hierdurch wird erreicht, dass sich das in einem Auftriebskörpers befindliche Fluid, während dieser durch die Eintrittsöffnung in den flüssigkeitsgefüllten Behälter bewegt wird, aufgrund des wirkenden Druckes bei der Verformung des Auftriebskörpers zumindest teilweise auf die unmittelbar benachbarten Auftriebskörper abgegeben wird. Dies führt dazu, dass sich der gegen den Auftriebskörper wirkende Widerstand beim Eintritt in den flüssigkeitsgefüllten Behälter verringert. Zugleich erhält unter anderem der sich zu diesem Zeitpunkt bereits im Inneren des Behälters befindliche aufnehmende Auftriebskörper eine Volumenvergrößerung, welche für zusätzlichen Auftrieb sorgt, Sobald ein Auftriebskörper die Eintrittsöffnung vollständig passiert hat und sich im flüssigkeitsgefüllten Behälter befindet, wird das während des Eintritts abgegebene Fluid aufgrund der Tatsache, dass es sich um ein geschlossenes fluidmäßig geschlossenes System handelt, da die einzelnen Auftriebskörper fluidmäßig untereinander verbunden sind, in den ursprünglichen Auftriebskörper zurück gedrückt, welcher im entlasteten Zustand dasselbe Volumen wie vor dem Eintritt in den flüssigkeitsgefüllten Behälter erreicht.

Eine bevorzugte Form der Auftriebskörper sieht vor, dass die fluidmäßige Konnektierung der Auftriebskörper untereinander über das Konnektierungselement erfolgt. Hierzu weist das Konnektierungselement eine Bohrung auf, die mit dem Innenraum des Auftriebskörpers fluidmäßig in Verbindung steht. Durch eine Schlauchverbindung wird eine Konnektierung mit den nachfolgenden oder bzw. darauffolgenden Auftriebskörper über ein weiteres Konnektierungselement bzw. dessen vorgesehene Bohrung erreicht. Eine vorteilhafte Variante sieht alternativ als Kopplungselement einen Schlauch, beispielsweise einen Hydraulikschlauch vor, der durch den jeweiligen Auftriebskörper hindurchführt und quer zu seiner Längserstreckung im Inneren eines jeden Auftriebskörpers Bohrungen aufweist, über den das Fluid in die bzw. aus den Auftriebskörper heraus transportiert werden kann.

Bei einem weiteren Ausführungsbeispiel ist auch vorgesehen, ein einziges Konnektierungselement vorzusehen, das den einen als auch den nachfolgenden Auftriebskörper mit umfasst. So wird eine effiziente Kraftübertragung erreicht. Die Flexibilität der Auftriebskörper reicht dadurch immer noch aus, um diese über die Umlenkelemente zu führen.

Alternativ können die elastischen Auftriebskörper ohne einen fluidgefüllten Hohlraum aufzuweisen, vollständig aus einem elastischen Material (z.B. ein hydrophober Schaumstoff) bestehen, der eine Verjüngung des Querschnitts erlaubt; bzw. mit einem solchen Material vollständig oder teilweise ausgefüllt werden.

Die Auftriebskörper selbst sind bei einem Ausführungsbeispiel an ihren Enden flach ausgebildet, so dass sie eine zylindrische Form aufweisen.

Sofern ein Konnektierungselement vorhanden ist, wird zwischen den einzelnen Auftriebskörpern Raum benötigt, um dieses entsprechend anzuordnen. Hierfür ist vorteilhafterweise vorgesehen, dass zwischen den Auftriebskörpern ein Hohlraum entsteht, innerhalb dessen das Konnektierungselement angeordnet werden kann. Die freien Enden jedoch sind unmittelbar in geringstmöglichen Abstand von einem Auftriebskörper zu einem anderen Auftriebskörper angeordnet, so dass an sich eine geschlossene Kette entsteht.

Der für den Auftrieb notwendige Zwischenraum bleibt jedoch dadurch erhalten, da aufgrund des herrschenden Drucks ausreichend Fluid in den genannten Zwischenraum gelangt.

Eine alternative Ausführungsform der erfindungsgemäßen Vorrichtung sieht einen einzigen elastischen Auftriebskörper vor, dessen Querschnitt im entlasteten Zustand größer als der Querschnitt der Eintrittsöffnung des flüssigkeitsgefüllten Behälters ist. Diese ist vorzugsweise schlauartig ausgebildet.

Die Höhe des flüssigkeitsgefüllten Behälters ist davon abhängig, wie viel Auftrieb erforderlich ist, d.h. wie viele Auftriebskörper zeitgleich in dem flüssigkeitsgefüllten Behälter auftreiben müssen, um die Vorrichtung gegen alle in der Vorrichtung wirkenden Reibungskräfte in Bewegung zu halten.

Um eine Leckage der Vorrichtung zu vermeiden, ist vorzugsweise unterhalb der Eintrittsöffnung des flüssigkeitsgefüllten Behälters ein Auffangelement(z.B. in Form einer Wanne oder einer Folie) zum Auffangen des austretenden Fluids vorgesehen. Der aufgefangene Fluid kann dann über einen weiteren Mechanismus (z.B. eine Pumpe) dem flüssigkeitsgefüllten Behälter wieder zugeführt werden.

Eine vorteilhafte Ausführungsform der Erfindung sieht eine Vorrichtung vor, die es erlaubt, das umlaufende Koppelungselement zu spannen. Dies kann beispielsweise durch verstellbare Umlenkelemente oder einen separaten Spannmechanismus (z.B. einen Kettenspanner) erfolgen.

In einer weiteren alternativen Ausführungsform der Erfindung werden mehrere erfindungsgemäße Vorrichtungen zu einer kombinierten Gesamtvorrichtung lösbar gekoppelt. Die Vorrichtungen können wahlweise an ihren unteren und/oder oberen Umlenkelementen auf einer gemeinsamen Welle gekoppelt und auf diese Art axial miteinander verbunden werden. Das durch die verbundenen Vorrichtung gemeinsam erzeugte Drehmoment kann über die gemeinsame Welle übertragen werden. Vorzugsweise werden die einzelnen Vorrichtungen derart mit der gemeinsamen Welle verbunden, dass diese Verbindung für jede Vorrichtung separat gelöst werden kann, um beispielsweise eine Wartung einer Vorrichtung während des fortgesetzten Betriebs der kombinierten Gesamtvorrichtungen zu ermöglichen.

Die gesamte Vorrichtung wird zweckmäßig von einem tragenden Gestell aufgenommen. Ein alternativer Einsatz der Vorrichtung sieht dabei vor, dass das Gestell mit der gesamten Vorrichtung in einer Flüssigkeit eingetaucht wird.

Vorzugsweise besteht die gesamte Vorrichtung aus Normteilen, wodurch die Herstellungskosten gering gehalten werden können. Die erfindungsgemäße Vorrichtung kann auch als Bausatz ausgestaltet und geliefert werden, hierdurch werden Montagekosten gespart.

### Beschreibung der Zeichnungen

Es zeigen:
- Fig.1: eine stark vereinfachte schematische Darstellung einer erfindungsgemäßen Vorrichtung;
- Fig. 2: eine Detailansicht einer Eintrittsöffnung des flüssigkeitsgefüllten Behälters in einer bevorzugten Ausführungsform.

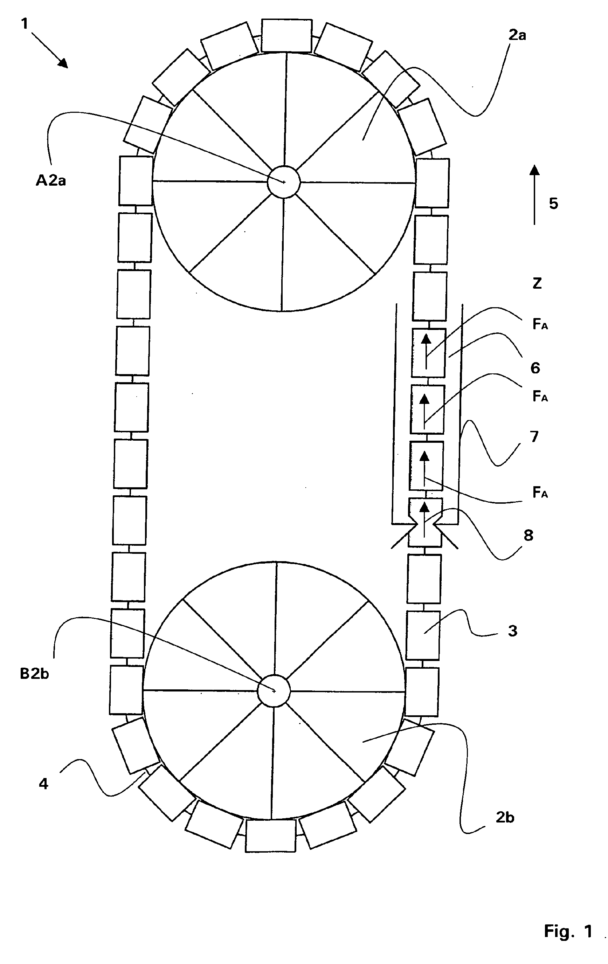

Figur 1 zeigt die erfindungsgemäße Vorrichtung 1 bestehend aus zwei Umlenkelementen 2a, 2b, welche vorzugsweise als Räder, Rollen oder Gleitflächen ausgebildet. Deren Achsen A₂ₐ, B_{2b} sind parallel zueinander ausgerichtet und senkrecht fluchtend übereinander angeordnet. Zwischen den Umlenkelementen 2a, 2b sind in dem gezeigten Ausführungsbeispiel mehrere Auftriebskörper 3, die mit einem Koppelungselement 4 - beispielsweise einem Draht, ein Seil oder ein Kunststoffband - miteinander zu einer Endloskette verbunden sind, derart gespannt, dass die Auftriebskörper 3 eine Umlaufbahn um die rotierenden Umlenkelemente 2a, 2b beschreiben. Auf der entgegen der Schwerkraft wirkenden Zugseite Z der Vorrichtung 1 ist ein mit einer Flüssigkeit 6 gefüllter Behälter 7 derart angeordnet, dass die Auftriebskörper 3 in Drehrichtung 5 durch den flüssigkeitsgefüllten Behälter 7 geführt werden. Als flüssigkeitsgefüllter Behälter 7 kann beispielsweise ein Rohr, ein Tank, aber auch ein flexibler Gewebesack oder ein ähnlicher fluiddichter Behälter 7 verwendet werden. Die Auftriebskörper 3 treten erfindungsgemäß durch eine Eintrittsöffnung 8 auf der Unterseite des flüssigkeitsgefüllten Behälters 7 ein. Um den Austritt von Flüssigkeit aus dem Behälter 7 zu verhindert, ist die Eintrittsöffnung 8 durch ein (nicht dargestelltes) Abdichtungselement verschlossen, welches flexibel ist und beim Eintritt eines Auftriebskörpers 3 nachgibt.

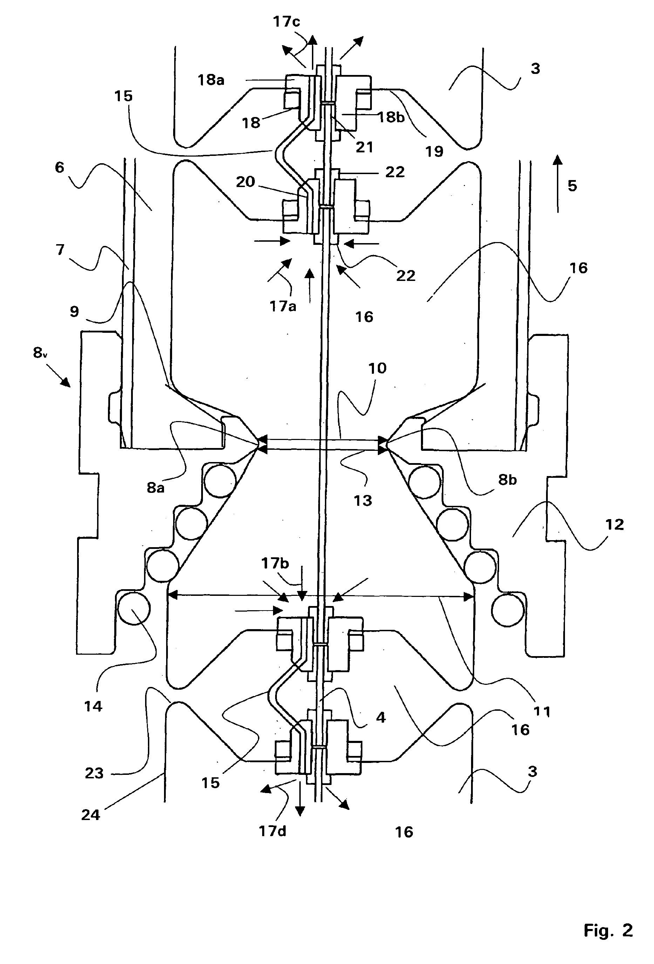

Figur 2 zeigt die Eintrittsöffnung 8 in den flüssigkeitsgefüllten Behälter 7 während ein Auftriebskörper 3 über ca. die Hälfte seiner Längserstreckung in den flüssigkeitsgefüllten Behälter 7 eingetreten ist. Ferner wird ein Trichterelement 12 gezeigt, welches die an dem Trichterelement 12 vorbeigeführten, elastischen Auftriebskörper 3 auf einen Querschnitt 13 reduziert, der dem Querschnitt 10 der Eintrittsöffnung 8 entspricht. Dieser Querschnitt 10 der Eintrittsöffnung 8 ist erfindungsgemäß kleiner als der Querschnitt 11 der elastischen Auftriebskörper 3 im entlasteten Ausgangszustand. Das Trichterelement 12 weist in dem gezeigten Ausführungsbeispiel quer zur Drehrichtung 5 der Auftriebskörper 3 Gleitelemente 14 auf, welche Gleitreibung zwischen den Auftriebskörpern 3 und der Oberfläche des Trichterelements 12 reduzieren und im gezeigten Ausführungsbeispiel als separat voneinander, quer zur Zugrichtung gelagerte Rollen ausgebildet sind.

Im Bereich der engsten Stelle des Trichterelements 12, die dem Querschnitt 10 der Eintrittsöffnung 8 entspricht, sind Dichtlippen 9 vorgesehen. Diese Dichtlippen 9 sind bei dem hier dargestellten Ausführungsbeispiel innerhalb des flüssigkeitsgefüllten Behälters 7 angeordnet und verhindern, dass innerhalb des Behälters 7 bevorrateter Fluid 6 aus dem Behälter 7 im Bereich der Eintrittsöffnung 8 ausfließen kann. Alternativ hierzu kann auch vorgesehen werden, dass Dichtlippen zusätzlich oder ausschließlich nur in dem Bereich der Eintrittsöffnung 8, insbesondere im Bereich des Querschnitts 10 angeordnet sind.

Die elastischen Auftriebskörper 3 sind durch ein Verbindungselement 15 fluidmäßig miteinander gekoppelt. Beim Eintritt eines Auftriebskörpers 3 strömt ein Teil des in ihm enthaltenen Fluids 16 durch die sich auf der Höhe der Eintrittsöffnung 8 bildenden Einschnürung der Oberfläche des Auftriebskörpers 3 in Richtungen 17a, 17b heraus und über die fluidmässigen Verbindungselemente 15 in Richtung 17c, 17d in die benachbarten Auftriebskörper 3.

Die einzelnen Auftriebskörper 3 sind mit Konnektierungselementen 18 versehen. Die jeweiligen Konnektierungselemente 18 sind an den Stirnseiten 19 der einzelnen Auftriebskörper angeordnet und zwar derart, dass die Konnektierungselemente aus zwei Teilen 18a und 18b bestehen, wobei das erste Teil 18a innerhalb des Auftriebskörpers 3 angeordnet ist und das weitere Teil 18b außerhalb auf das erste Teil 18a vorzugsweise aufgeschraubt ist. Ferner sind in den jeweiligen Kannektierungsalementen 18 Bohrungen 20 vorgesehen, die mit dem bereits beschriebenen Verbindungselement 15 verbunden sind. Dadurch wird eine fluidmäßige Verbindung zwischen den einzelnen Auftriebskörpern erzielt.

Ferner weisen die Konnektierungselemente zentrierte Bohrungen 21 auf, durch die ein Kopplungselement 4 hindurchführbar ist. Bei dem hier dargestellten Ausführungsbeispiel ist das Kopplungselement 4 ein endloses Seil oder eine endlose Kette, mittels der Zugkräfte übertragen werden können. Um ein Durchgleiten oder Durchrutschen des Kopplungselements 4 innerhalb der Auftriebskörper zu verhindern, sind Stoppelemente 22 vorgesehen. Diese Stoppelemente 22 sind auf das Kopplungselement 4 aufschiebbar und im montierten Zustand vorzugsweise an das Kopplungselement 4 fixierbar, in dem dieses gequetscht wird. Dadurch ist eine Kraftübertragung der entstehenden Zugkraft von den Kopplungselementen 4 auf die Konnektierungseiemente 18 möglich.

Die freien Enden 23 der jeweiligen Auftriebskörper 3 sind derart ausgebildet, dass der Abstand von den einen Auftriebskörper 3 zu dem darauffolgenden Auftriebskörper 3 sehr gering ist. Aufgrund der Ausbildungen der jeweiligen Konnektierungselemente 18 entsteht zwischen den Auftriebskörpern 3 ein Freiraum 24, der für das Verbindungselement 15 sowie für die Konnektierungselemente 18 selbst genutzt wird. Aufgrund der speziellen Ausbildung der freien Enden 23 bei dem hier dargestellten Ausführungsbeispiel wird nahezu eine einheitliche Außenfläche 25 der jeweiligen Auftriebskörper 3 erzielt.

Ferner ergibt sich ein Vorteil, wenn der Abstand zwischen zwei gekoppelten Auftriebskörpern 3 geringer ist, als die Materialstärke der Umrandungen 8a, 8b der Eintrittsöffnung 8.

### Funktionsweise:

Die sich im flüssigkeitsgefüllten Behälter 7 befindlichen Auftriebskörper 3 erfahren eine Auftriebskraft F_{A} (dargestellt in Fig. 1), die der Gewichtskraft des verdrängten Flüssigkeitsvolumens entspricht (F_{A}=-ρ*V*g). Hierdurch entsteht eine Zugkraft, welche die mit dem Koppelungselement 4 verbundenen Auftriebskörper 3 zunächst entgegen der Schwerkraftrichtung bewegt. Sobald die miteinander verbundenen Auftriebskörper 3 das obere Umlenkelement 2a passieren, wird die Bewegungsrichtung entgegen der Schwerkraft umgelenkt. Die Gewichtskraft der Auftriebskörper 3 und des Koppelungselements 4 vergrößern an dieser Stelle die Bewegungsenergie und damit die Umdrehgeschwindigkeit bzw. das Drehmoment der Vorrichtung. Nachdem die verbundenen Auftriebskörper 3 das untere Umlenkelement 2b passiert haben bewirkt die weiterhin auf die sich in dem flüssigkeitsgefüllten Behälter 7 befindlichen Auftriebskörper 3 wirkende Auftriebskraft F_{A}, dass die Auftriebskörper 3 wiederum entgegen der Schwerkraftrichtung aufsteigen. Jeder aufsteigende Auftriebskörper 3 erreicht nacheinander die untere Stirnseite des flüssigkeitsgefüllten Behälters 7 mit der Eintrittsöffnung 8. Hier wird der Querschnitt 10 (in Fig. 2 dargestellt) des Auftriebskörpers 3 aufgrund der weiterhin auf diesen wirkenden Zugkraft durch elastische Verformung auf den Querschnitt 11 der Eintrittsöffnung 8 verjüngt. Sobald sich der Querschnitt 10 des Auftriebskörpers 3 auf den Querschnitt 11 der Eintrittsöffnung 8 verjüngt hat, wird der Auftriebskörper 3 sukzessive in den flüssigkeitsgefüllten Behälter 7 gezogen. Unmittelbar nach dem Eintritt in den flüssigkeitsgefüllten Behälter 7 beginnt der verformte elastische Auftriebskörper 3 sich in seine Ausgangsform im entlasteten Zustand zurückzubilden, Durch diesen sukzessiven ablaufenden Prozess bildet sich bei dem sich in den flüssigkeitsgefüllten Behälter 7 bewegenden Auftriebskörper 3 auf Höhe der Eintrittsöffnung 8 eine Einschnürung die kontinuierlich gemäß der aufsteigenden Bewegung des Auftriebskörpers 3 an diesem herunterwandert, bis der Auftriebskörper 3 vollständig in den flüssigkeitsgefüllten Behälter 7 eingetreten ist. Dieser Prozess wiederholt sich bei jedem weiteren, in den flüssigkeitsgefüllten Behälter 7 eintretenden Auftriebskörper 3.

### BEZUGSZEICHENLISTE

- 1.: Vorrichtung
- 2a.: Umlenkelement
- 2b.: Umlenkelement
- 3.: Auftriebskörper
- 4.: Kopplungselement
- 5.: Drehrichtung
- 6.: Flüssigkeit
- 7.: Behälter
- 8.: Eintrittsöffnung
- 9.: Dichtlippe
- 10.: Querschnitt
- 11.: Querschnitt
- 12.: Trichterelement
- 13.: Querschnitt
- 14.: Gleitelement
- 15.: Verbindungselement
- 16.: Hohlraum
- 17.: Strömungsrichtung
- 18.: Konnektierungselement
- 18a.: Erstes Teil Konnektierungselement
- 18b.: Zweites Teil Konnaktierungselement
- 19.: Stirnseite des Auftriebskörpers 3
- 20.: Bohrung
- 21.: Kopplungselement
- 22.: Stoppelement
- 23.: Freien Enden des Auftriebskörpers
- 24.: Außenhaut

## Patentansprüche

1. Vorrichtung (1) zur Energieerzeugung in Form eines Drehmoments, bestehend aus mindestens zwei fluchtend zueinander angeordneten Umlenkelementen (2a, 2b), einem endlosen, kettenartigen Koppelungselement (4) an dem mindestens zwei Auftriebskörper (3) angeordnet sind und einem vertikal ausgerichteten flüssigkeitsgefüllten Behälter (7) mit einer an dessen dem Erdboden zugewandten Stirnseite ausgebildeten Eintrittsöffnung (8) sowie einem Abdichtungselement (9) welches den Austritt der Flüssigkeit verhindert, wobei die Auftriebskörper (3) eine Umlaufbewegung um die Umlenkelemente (2a, 2b) beschreiben und die sich entgegen der Schwerkraft bewegenden Auftriebskörper den flüssigkeitsgefüllten Behälter (7) durch die Eintrittsöffnung (8) passieren,
**dadurch gekennzeichnet, dass**
a. die Auftriebskörper (3) elastisch sind und
b. der Querschnitt (10) der Eintrittsöffnung (8) des flüssigkeitsgefüllten Behälters (7) kleiner ist, als der Querschnitt (11) eines elastischen Auftriebskörper (3) im entlasteten Zustand.

2. Vorrichtung nach Anspruch 1, **dadurch gekennzeichnet, dass** vor der Eintrittsöffnung (8) ein Trichterelement (12) angebracht werden kann, das den Querschnitt (11) des elastischen Auftriebskörpers (3) auf den Querschnitt (10) der Eintrittsöffnung (8) reduziert.

3. Vorrichtung nach Anspruch 2, **dadurch gekennzeichnet, dass** das Trichterelement (12) mit Gleitelementen (14) versehen ist.

4. Vorrichtung nach mindestens einem der vorgenannten Ansprüche, **dadurch gekennzeichnet, dass** die elastischen Auftriebskörper (3) einen fluidgefüllten Hohlkörper bilden.

5. Vorrichtung nach Anspruch 4, **dadurch gekennzeichnet, dass** die Vorrichtung mindestens zwei elastischen Auftriebskörper (3) aufweist, die fluidmäßig miteinander verbunden sind.

6. Vorrichtung nach mindestens einem der vorgenannten Ansprüche, **dadurch gekennzeichnet, dass** der Abstand zwischen zwei gekoppelten Auftriebskörpern (3) geringer ist, als die Materialstärke der Umrandungen (8a, 8b) der Eintrittsöffnung (8).

7. Vorrichtung nach mindestens einem der vorgenannten Ansprüche, **dadurch gekennzeichnet, dass** der flüssigkeitsgefüllte Behälters (7) mit einem Auffangelement vor einer Leckage gesichert ist.

8. Vorrichtung nach mindestens einem der vorgenannten Ansprüche, **dadurch gekennzeichnet, dass** eine Vorrichtung zur Spannung des Koppelungselements (4) angebracht werden kann.

9. Vorrichtung nach mindestens einem der vorgenannten Ansprüche, **dadurch gekennzeichnet, dass** mindestens zwei Vorrichtungen miteinander gekoppelt sind.

## Geänderte Patentansprüche

### Geänderte Patentansprüche gemäss Regel 86(2) EPÜ.

**1.** Vorrichtung (1) zur Energieerzeugung in Form eines Drehmoments, bestehend aus mindestens zwei fluchtend zueinander angeordneten Umlenkelementen (2a, 2b), einem endlosen, kettenartigen Koppelungselement (4) an dem mindestens zwei Auftriebskörper (3) angeordnet sind und einem vertikal ausgerichteten flüssigkeitsgefüllten Behälter (7) mit einer an dessen dem Erdboden zugewandten Stirnseite ausgebildeten Eintrittsöffnung (8) sowie einem Abdichtungselement (9) welches den Austritt der Flüssigkeit verhindert, wobei die Auftriebskörper (3) eine Umlaufbewegung um die Umlenkelemente (2a, 2b) beschreiben und die sich entgegen der Schwerkraft bewegenden Auftriebskörper den flüssigkeitsgefüllten Behälter (7) durch die Eintrittsöffnung (8) passieren,
**dadurch gekennzeichnet, dass**
a. die Auftriebskörper (3) elastisch sind,
b. der Querschnitt (10) der Eintrittsöffnung (8) des flüssigkeitsgefüllten Behälters (7) kleiner ist, als der Querschnitt (11) eines elastischen Auftriebskörper (3) im entlasteten Zustand,
c. die elastischen Auftriebskörper (3) einen fluidgefüllten Hohlkörper bilden und
d. die Vorrichtung mindestens zwei elastische Auftriebskörper (3) aufweist, die fluidmäßig miteinander verbunden sind.

**2.** Vorrichtung nach Anspruch 1, **dadurch gekennzeichnet, dass** vor der Eintrittsöffnung (8) ein Trichterelement (12) angebracht werden kann, das den Querschnitt (11) des elastischen Auftriebskörpers (3) auf den Querschnitt (10) der Eintrittsöffnung (8) reduziert.

**3.** Vorrichtung nach Anspruch 2, **dadurch gekennzeichnet, dass** das Trichterelement (12) mit Gleitelementen (14) versehen ist.

**4.** Vorrichtung nach mindestens einem der vorgenannten Ansprüche, **dadurch gekennzeichnet, dass** der Abstand zwischen zwei gekoppelten Auftriebskörpern (3) geringer ist, als die Materialstärke der Umrandungen (8a, 8b) der Eintrittsöffnung (8).

**5.** Vorrichtung nach mindestens einem der vorgenannten Ansprüche, **dadurch gekennzeichnet, dass** der flüssigkeitsgefüllte Behälters (7) mit einem Auffangelement vor einer Leckage gesichert ist.

**6.** Vorrichtung nach mindestens einem der vorgenannten Ansprüche, **dadurch gekennzeichnet, dass** eine Vorrichtung zur Spannung des Koppelungselements (4) angebracht werden kann.

**7.** Vorrichtung nach mindestens einem der vorgenannten Ansprüche, **dadurch gekennzeichnet, dass** mindestens zwei Vorrichtungen miteinander gekoppelt sind.
